(19) Europäisches Patentamt
European Patent Office
Office européen des brevets

(11) Publication number: **0 168 050**
**A2**

(12) # EUROPEAN PATENT APPLICATION

(21) Application number: 85108611.6

(22) Date of filing: 10.07.85

(51) Int. Cl.[4]: B 60 S 9/215
B 62 D 5/07, B 60 T 13/16
B 60 R 16/08, G 01 G 19/02

(30) Priority: 10.07.84 ES 534159

(43) Date of publication of application:
15.01.86 Bulletin 86/3

(84) Designated Contracting States:
AT BE CH DE FR GB IT LI LU NL SE

(71) Applicant: HIDROKAR, S.A.
C/Goya 47
E-28001 Madrid(ES)

(72) Inventor: Sandin Espina, Beatriz
C/ San Ezequiel, 39 2o Derech
Gijon-8(ES)

(74) Representative: Lorenz, Eduard et al,
Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier
Widenmayerstrasse 23 D-8000 München 22(DE)

(54) **Hydraulic system for vehicles.**

(57) A hydraulic system consists of an electrohydraulic set, a control set and a set of driven elements. The electrohydraulic set comprises a fluid tank to which is adapted a pump connected to a direct current electric motor by means of an elastic coupling, said pump capable of delivering the aspirated fluid from the tank toward different electrovalves which control the actuation of the driven elements, and to which the latter are connected preferably by means of flexible pipes. The control set is formed by a group of pulsators-commutators, the actuation of which determines the operation of the electrovalve (s) corresponding to the element (s) which are to be driven, this group being fed through a main switch and the set of pulsators-commutators provided on the control board of the vehicle in a place easily accessible to the user. The set of driven elements is formed a unit of cylinders, preferably of double effect, the rods of which can be provided with rolling end elements, said cylinders positioned in precise places of the vehicle as a function of the operation these are to perform, and at least part of these cylinders being intersynchronized for their even expansion and at the same speed.

EP 0 168 050 A2

BRIEF DESCRIPTION OF THE INVENTION

The object of the present application for Patent of Invention relates to a hydraulic system for vehicles, which furnishes essential novelty characteristics over the hitherto known systems.

The needs for having a hydraulic system in a vehicle are all the more evident at the time of checking the different functions that can be performed with the same. In order to provide a vehicle with a hydraulic system according to the invention, it is exclusively necessary to have an electrohydraulic drive set in any inactive place of the vehicle, as well as a control panel at the disposal of the user who, controlling the aforesaid set, controls this so as to perform the different functions by means of actuated elements such as cylinders, distributors, etc.

The first specific function for which this system has been devised consists in obtaining a total or partial lifting of the vehicle. This is attained by the inclusion in the lower part of the vehicle of hydraulic cylinders actuated by the system, and which namely offer the following advantages as stated hereinbelow:

- The partial lifting of the vehicle by means of a hydraulic system of these characteristics permits the rechanging of tires, the placing of chains on the same, checking of the brakes, etc., all this without having to use any auxiliary element, either in the shop or on the road.

- The total lifting of the vehicle permits keeping the same supported by the hydraulic cylinders without producing any energy consumption, since the fluid losses of the system are nil; this permits, on the one hand,performance of any

series of repair and maintenance operations of the vehicle by using the self-lifting system furnished to it by the invention which I have devised. On the other hand, it is designed that, for hard access parkings, hydraulic motors be placed, which actuate rolling means provided in the cylinders which make possible the lateral shift of the vehicle or, as the case may be, - in any direction.

- The total lifting of the vehicle permits at the same time, by metering of the pressures supported by each one of the lifter cylinders, determining the total weight of the loaded, or empty, vehicle.

This hydraulic system permits at the same time the performance of several functions, all of them in those cases in which a hydraulic device of any type is required, such as the actuation of a fully hydraulic steering, or the actuation on an auxiliary brake, for example, a tow trailer.

As hereinbefore described, the system consists mainly of - - three parts: an electrohydraulic drive set which includes an - electric motor connected to a battery and which actuates a pump coupled to a hydraulic circuit which, directing fluid from the tank, impels it toward a series of electrovalves, the action of which is controlled from a control panel situated at the disposal of the user, and which activate a driven element or cylinder.

The drive set has been designed so that it consists of a unitary block, which can be placed in any inactive point of a vehicle, either in the cabin, trunk, etc. For its part, the control panel is generally sited in the control board of the vehicle or in any similar point of easy access to the user. The driven elements are provided in those points of the vehicle in which it -

is necessary to perform any specific function.

Additional objects and advantages of the invention will become apparent as the following detailed description of the invention is read in conjunction with the accompanying drawings which, merely as an example and without any limitative character, illustrate a preferred embodiment of the invention. In - said drawings:

BRIEF DESCRIPTION OF THE DRAWINGS

Figure 1 is an upper plan view of the electrohydraulic drive set of the system of the invention.

Figure 2 is an elevational view of the drive set shown in - figure 1.

Figure 3 shows diagrammatically the hydraulic circuit used - by the system according to an embodiment of the same.

Figure 4 corresponds to the electrical circuit of the devised system.

Figure 5 is an elevational view of a unit formed by a cylinder, a leg and a tension member, used as lifter means of the vehicle.

Figure 6 shows a section bisected by line I-I of figure 5.

Figure 7 shows a section bisected by line II-II of figure 5.

Figure 8 shows diagrammatically a second embodiment of the - hydraulic circuit, provided with weighing means.

DETAILED DESCRIPTION OF THE INVENTION

Referring initially to figures 1 and 2 of the drawings, - - shown therein are an upper plan and elevational views, respectively, of the electrohydraulic drive set used in the system of the invention. Said drive set comprises a tank 1 for fluid, provided with an intake mouth closed at the upper part thereof by means of a plug 2, and an electric motor 3 secured to the afore

said tank 1. By means of a support base 4 secured to said tank 1, a set of electrovalves 5 is provided, interdifferentiated - with different successive digits 5.1, 5.2, 5.3, 5.4, ........, etc., carrying out the union between said base 4 and the tank 1 by means of sundry pressure conduits 6 and return conduit 7. From the aforesaid base 4 is effected the connection with the corresponding cylinders, by means of flexible pipes, with their drive controlled by means of said electrovalves 5.

In the figures hereinbefore described are also shown the arrangement of a connector for batteries 8, as well as a viewer 9 of the fluid level and a draining or emptying plug 10 of the fluid tank 1.

Referring now to figure 3, shown therein is a diagrammatic view of a hydraulic circuit representing the principle of operation of the system of the invention. Thus, tank 1 is shown - provided with the filler plug 2 and the level viewer 9, in the interior of which is housed a hydraulic pump 11, which is driven by the motor 3 by means of a suitable transmission 12 coupled to the drive shaft of said electric motor 3. The aforesaid hydraulic pump 11 furnishes fluid to the electrovalves 5.1, .., 5.4, ........, and from these to the different cylinders 13, - preferably one for each electrovalve and correspondingly differentiated between each other by means of a second consecutive digit, carrying out the union between the aforementioned electrovalves 5 and said cylinders 13 by means of flexible conduits - 14. Each union between an electrovalve 5 and its associated cylinder 13 is carried out by means of two conduits, of which one is used as pressure conduit and has been marked with the subindex "a" and the other is used as return conduit toward the tank 1 and has been marked with the subindex "b".

In the outflow line of the hydraulic pump 11 has been provided an overpressure valve 15, joined logically at its opposite end to the tank 1, as well as a manometer 16, joined to said - outflow line by means of a flexible conduit 17, and positionable on the control board of the vehicle, to enable the user to know at any time the work pressure of the hydraulic circuit.

From the figures hereinbefore described (principally figure 3), the basic operating principle of the system of the invention is clearly deduced. Thus, when continuous voltage is furnished to the electric motor 3, either from the feed battery of the vehicle or from an auxiliary battery, it causes said motor to start driving, by means of the transmission 12, the hydraulic pump 11. The fluid pumped by said hydraulic pump will reach the desired cylinders 13, as a function of the position of the electrovalves 5 previously selected by the user. For example, - supposing the cylinders 13.1 to 13.4 are used to lift the vehicle from four of its different points. Selecting properly the - electrovalves 13.1 to 13.4, it will cause the partial or total lifting of the vehicle.

The rotation inversion of the motor 3 will help in the re- - turn of the fluid toward the tank 1, provoking the retrocession of the actuated cylinders. The expected timing for said cylinders determines that the different operations may be performed gradually and without any sudden jumps.

As deduced from the foregoing, the set of electrovalves 5 is used as a selective control means of the different cylinders. - In general, it could consist of a longitudinal slide distributor, of sufficiently precise construction, controlled by an - - electromagnetic system of the type illustrated in figure 4 of - the drawings, in order to position the slide at any end or intermediate point of its travel, the shift of the slide proportional to the intensity of the excitation electric current of the corresponding coil and varying as a function of the sign of said electric current.

In the circuit illustrated in figure 4, shown therein are the electrovalves, divided into two sections indicating the - advance (indicated with the subindex "a") and return (indicated with the subindex "b") positions electrically connected to the control buttons 18, likewise correspondingly indicated - with the subindices "a" and "b". The electric motor 3 is fed by means of a contactor 19 which is actuated jointly with any of the pulsators 18. This unit is electrically protected by a fuse 20 and is fed with the same battery as the motor 3, having further provided a switch 21 for the connection/disconnection of the same.

Since the control means of the system are constituted by - the pulsators 18, both these and the general switch 21 are positioned on the control board of the vehicle in a place easily accessible to the user. With the actuation of any pulsator, it causes the motor 3 to start, which drags the hydraulic pump 11 and the opening of the corresponding electrovalve in the desired direction.

As described hereinbefore, the cylinders 13.1 to 13.4 may be provided to provoke the partial or total lifting of the vehicle. Obviously, this lifting will be produced by shift of - the piston and rod associated to each cylinder, and after the ends of the different rods have knocked against the floor or the support surface. Said rods, as described in the first part of the description of the invention, may include rolling means for shifting of the vehicle.

In this embodiment, the aforesaid cylinders are secured to the chassis of the vehicle in vertical position, so that the preferred application of the same shall be for large size vehicles, like trucks, buses, etc., in which the chassis has an appreciable height from the ground. However, in the case of automobiles in which the distance of the chassis from the ground is much less, the presence of the cylinders in vertical position under the chassis may give rise to multiple drawbacks, due to the short distance from the ground at which their lower ends would become positioned.

This drawback has also been favorably resolved by the invention, for which purpose the cylinders used in lifting the vehicle are placed in horizontal position parallel to the longitudinal shaft of the vehicle and oriented opposite the former with respect to the latter.

An example of the embodiment is illustrated in figures 5 to 7, showing therein a cylinder 22 conveniently secured to a support means 23 which has an inverted "U" shape. The cylinder has a piston rod 24 which is articulated at its end to a spring leg 25 by means of a bolt 26. Several ties 27 have likewise been provided which, at one of their ends are articulated, by means of bolts 28, to the sides of the support 23, whereas at their opposite end are articulated, by means of bolts 29, to lateral projections 30 provided in the leg 25.

The aforesaid leg 25 is constituted by an upper part or liner secured upperly, preferably by welding, to a hinge 31, and a lower part which is housed in the interior cavity of the upper part, which has been provided with a perimetric step which acts as seat of a spring 32 which, at its upper end, rests against the internal base of said hinge 31. The relative shift

between both parts of the leg is limited by the length of an opening 33 made on the wall of the upper part and in which is housed and glides a pin 34 locked together to the lower part.

At the lowest end of the lower part of the leg 25 has been provided a support 35 in the shape of an inverted "U", in the interior of which is housed a wheel 36 secured to said support by means of a shaft 37. A hydraulic motor 38 has also been provided, adapted to the same shaft 37 and secured to a side of the support 35 by means of a connecting piece 39.

The position illustrated in figure 5 corresponds to the working position of the system, that is, when the automobile is being partially or totally supported by the different legs of the cylinders. In the rest position of the system, shown with discontinuous lines, the leg 25 adopts a horizontal position as continuation of the same rod 24 of the cylinder to which it is associated, and the wheel 36 becomes housed in the interior of an elastic stop 40.

In order to situate the leg 25 in its working position, the corresponding cylinder 22 is actuated, so that upon producing the thrust on the upper end of the leg and the latter being, in turn, secured to the ties 27, said leg is forced to rotate with respect to its articulation to the aforesaid ties, until it reaches the vertical position, that is, forming a 90° angle with respect to the cylinder. This end position can be controlled with overtravel limits or arresters.

The aforesaid ties 27 are secured, as illustrated in the figure, in the proximities of the farthest ends of the cylinder 22 and of the leg 25. With it, a sufficient firing arm is established to avoid possible ruptures as a consequence of the traction effect.

So that the ties 27 may permit performing the operations hereinbefore described and position the leg correctly, it is necessary that said ties have a definite length. For the calculation of this length, it will be assumed that the length of the rod of each cylinder is approximately equal to that of the cylinder "C"; the length of the spring leg is represented with the letter "P", and the length of the tie with "T". As in working position the rod is extended and the leg forming a straight angle with said rod, the expression will be thus:

$$T^2 = (2C)^2 + P^2 \qquad (I)$$

In rest position, the leg is horizontal (contracted rod), and therefore, the length of the tie is equivalent to that of the leg plus that of the cylinder, that is:

$$T = P + C \qquad (II)$$

Substituting this value in the expression (I) and working it out, we obtain:

$$P = \frac{3}{2} C$$

Substituting the value of P in the expression (II), we obtain:

$$T = \frac{5}{2} C$$

These values have to be assumed as approximate, in no case limitative, since the length of the rod is not exactly equal to that of the cylinder, and furthermore there are other magnitudes, as for example the height of the hinge, which in the rest position of the leg 25 cannot be absorbed in the interior of the cylinder. In general, it must be understood that the length of the ties 27 has to be such that it permits the correct positioning of the leg 25 in both working and rest positions, this length being comprised between 2 and 3 times the length of the cylinder.

As described hereinabove, the legs 25 are provided in the lower part with a wheel 36, to the shaft of which can be adapted a hydraulic motor 38. By means of said motor and conveniently controlled from the control board, movement can be furnished to the wheels 36 and shift the vehicle, simply resting on said wheels, in the desired direction.

The dampening of each leg 25 has been described and represented as a mechanical spring 32, and this must not be understood either as limitative since each dampening can be equally furnished by any known hydraulic system or by any similar means.

In figure 3 of the drawings has been represented diagrammatically an embodiment of the hydraulic circuit, in its most simple concept, and in order that the manner of carrying out the actuation of the different cylinders, expected in practice, may be understood. However, in figure 8 is illustrated a more detailed embodiment of the hydraulic system, applicable to the system of the invention. Thus, in the same manner as in figure 3, in the representation of figure 8 is shown a fluid tank 1, provided with a level viewer 9, from which the pump 11 suc- - tions the fluid through a filter 41, said pump being moved by an electric motor 3 to which it is joined by means of an elastic coupling 12. The fluid suctioned by the pump 11 is delivered, by means of the conduit 42, to the electrovalve 5 from which two parallel conduits branch off, of which the conduit 45 reaches a circuit selector 44. From this circuit selector 44 fluid feed can be furnished toward one or more cylinders 45

for the performance of auxiliary functions (for example, braking of a trailer, hydraulic steering...., etc.) and also, by means of the conduit 46, to a flow divider 47. Said flow divider is joined by means of sundry outflow pipes 48.1 and 48.2, respectively, to other as many flow dividers 49.1 and 49.2, - by means of which are fed, respectively, the pairs of cylinders 50.1 - 50.2 and 51.1 - 51.2. The different cylinders are protected by means of appropriate valves 52 and by stroke limiters 53. On the other hand, a common line of fluid return - toward the electrovalve 5 has been provided, equipped with a flow regulator 54 and the feeding of the auxiliary cylinder(s) 45 is carried out by means of a second flow regulator 55.

The provision of the aforesaid flow dividers 47 and 49 permits timing perfectly the actuation of the lifting cylinders - 50 and 51, so that their expansion is carried out evenly and - at the same speed. The existence of the stroke arresters 53 - permit the actuation, in the case of opening of the same, the aforementioned fluid return circuit. Lastly, the actuation on the circuit selector 44 permits operating at will on the corresponding cylinders as a function of the operation desired - to be carried out.

The system has provided furthermore, for the cases in which it is necessary in accordance with the application that is to be given to the same, the inclusion of weighing means. Said - means shall be constituted, preferably, by a transducer 56, - conveniently connected to the outflow pipe 42 of the pump 11, and by means of which the pressure existing in said pipe 42 is transformed into power units. Since the transducer 56 shall be preferably the digital type, the information received is shown by it to the user directly on the corresponding display, where

by the total weight of the vehicle, loaded or unloaded, can be found out at any time. The transducers of this type currently on the market have a tolerance margin of $\pm$ 0.25%, so that weighings performed by the system of the invention are of a much more precise value than those normally carried out with static weighers. Moreover, said transducers shall preferably be provided with printing means which facilitate a printed label or ticket containing at least the value data of the weighing carried out, the date and time at which such weighing was performed.

The unit may also have other accessory elements, as for example a safety valve 57 joined to the conduit 42 and used as a means of fluid return to the tank 1 when the pressure in said conduit 42 exceeds a previously established limit value, and also a return-and air-filter set indicated in the figure illustrated with the numerical reference 58.

It has been described hereinbefore that the control means are found on the control board of the vehicle. However, in the case of trucks or the like, such actuation means of the weighing system are situated preferably outside the vehicle, on its left side.

Although the object of the present application for Patent of Invention has been sufficiently described, it will be understood that certain modifications in structure can be effected without departing from the principles of the invention, likewise protected, which may affect the unit or its parts, such as materials, manufacturing forms and sizes, number of cylinders actuated, protection elements, etc. or any others which do not alter the spirit and scope of the invention.

0168050

## CLAIMS

1.- Hydraulic system for vehicles, which is characterized because essentially it consists of an electrohydraulic set, a control set and a set of driven elements; because said electrohydraulic set comprises a fluid tank to which is adapted a pump connected to a direct current electric motor by means of an elastic coupling, said pump capable of delivering the aspirated fluid from the tank toward different electrovalves which control the actuation of the driven elements, and to which the latter are connected preferably by means of flexible pipes; because the control set is formed by a group of pulsators-commutators, the actuation of which determines the operation of the electrovalve(s) corresponding to the element(s) which are to be driven, this group being fed through a main switch and the set of pulsators-commutators provided on the control board of the vehicle in a place easily accessible to the user; and because the set of driven elements is formed by a unit of cylinders, preferably of double effect, the rods of which can be provided with rolling end elements, said cylinders positioned in precise places of the vehicle as a function of the operation these are to perform, and at least part of these cylinders being intersynchronized for their even expansion and at the same speed.

2.- System as defined in claim 1 and further characterized because four of the aforementioned cylinders will be used in the partial or total lifting of the vehicle and will be sited in the proximities of the four end points thereof, whereas the rest of the cylinders provided will be used to carry out complementary functions, such as hydraulic steering, actuation of the brake of a tow trailer or any other desired function.

3.- System as defined in claims 1 and 2 and further characterized because in the case of its application in automobiles, in which the distance of the chassis from the ground is reduced, the cylinders entrusted with the partial or total lifting of the vehicle are arranged in horizontal position, parallel to the longitudinal shaft of the vehicle, secured preferably by means of inverted "U" supports, to the corresponding rods of which has been articulated a spring leg, provided in the lower part thereof with rolling means, and each leg with the inverted "U" support being linked with its associated cylinder by means of sundry lateral ties conveniently articulated at both ends of the leg and to the aforesaid supports.

4.- System as defined in claims 1 to 3 and further characterized because with the rods of the lifting cylinders in expanded position, the legs adopt working position, arranged vertically forming a 90$^{\circ}$ angle with respect to the associated cylinder.

5.- System as defined in claims 1 to 3 and further characterized because in rest position, the legs associated to the lifting cylinders are in horizontal position, as continuation of the same rods, with the rolling means resting against suitable elastic stops or limiters.

6.- System as defined in claims 1 to 3 and further characterized becaused each dampened leg is formed preferably by an upper body or liner which, at its upper end is joined to a hinge by means of which the articulation to the rod of the corresponding cylinder is carried out, and a lower body which is housed in the interior of the upper body, said lower body provided with a perimetric seat on which rests a spring which, at its opposite end rests against the aforementioned hinge,

the relative dampening movement being limited between both bodies throughout the length of a longitudinal groove cut in the upper body, and in which is housed a pin secured to said lower body.

7.- System as defined in claims 1 to 6 and further characterized because the aforesaid rolling means provided in said legs have respective built-in hydraulic motors, pressed on the same rotation shaft of the wheels and actuatable from the control board of the vehicle.

8.- System as defined in the preceding claims and further characterized because, in a preferable embodiment of the same, the hydraulic circuit shall have, in continuation of the fluid suction pump, an electrovalve from which it is fed, by means of a circuit selector actuatable at will, to the cylinders in charge of performing the auxiliary functions and/or a flow divider, from which extend sundry outflow lines for feeding of two other flow dividers from each one of which extend two conduits to feed, respectively in twos, the four cylinders in charge of the partial or total lifting of the vehicle.

9.- System as defined in claim 8 and further characterized because a common fluid return line has been devised toward the electrovalve provided with a flow limitator.

10.- System as defined in claims 8 and 9 and further characterized because the feed lines of the lifting cylinders have been provided with suitable protection valves, whereas in the feed line of the auxiliary cylinders has been provided a flow limitator device.

11.- System as defined in the preceding claims and further characterized because as protection means, the cylinders may include stroke limitator elements.

12.- System as defined in the preceding claims and further characterized because, optionally, a safety valve may be provided, connected to the outlet pipe of the suction pump and which constitutes a return path of the fluid toward the corresponding tank in case the pressure of said pipe exceeds the setting value of the aforesaid valve.

13.- System as defined in the preceding claims and further characterized because the system may, optionally, also include weighing means, connected to the outflow pipe of the suction pump, consisting preferably of a digital transducer by means of which is produced the transformation of the pressure units into power units showing this to the user for his direct reading.

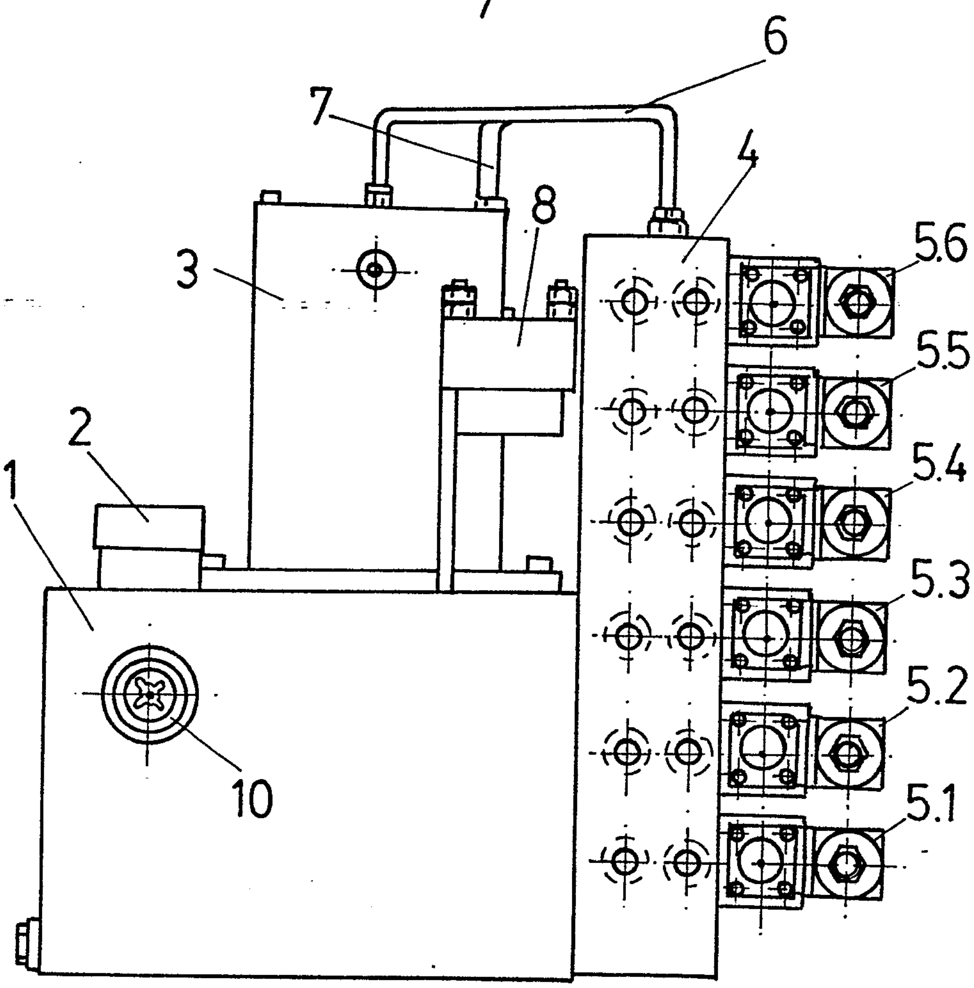


FIG.2

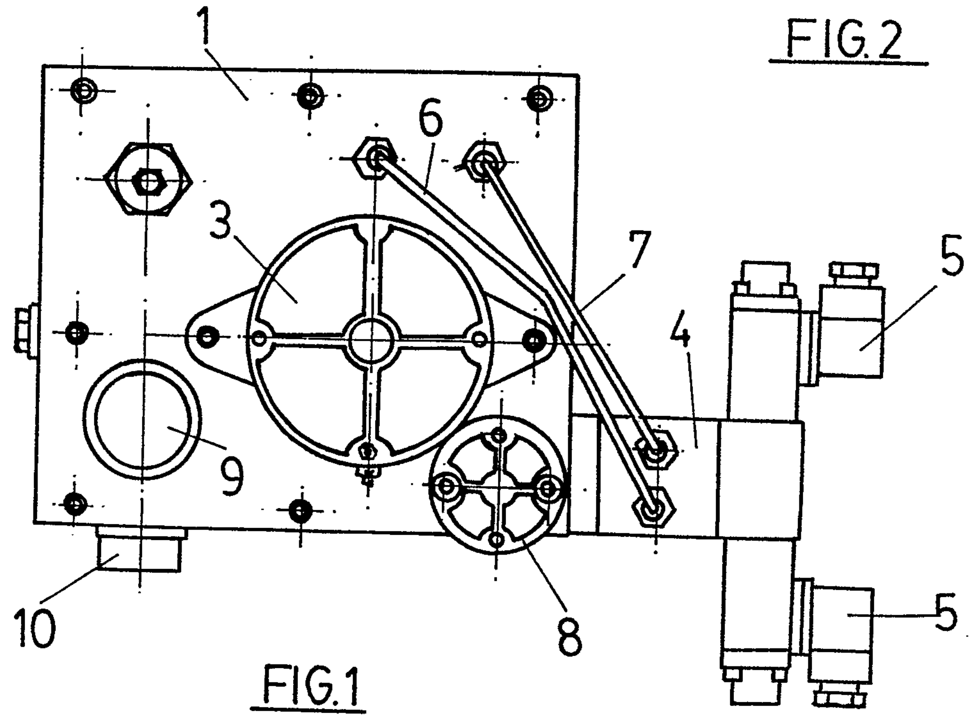


FIG.1

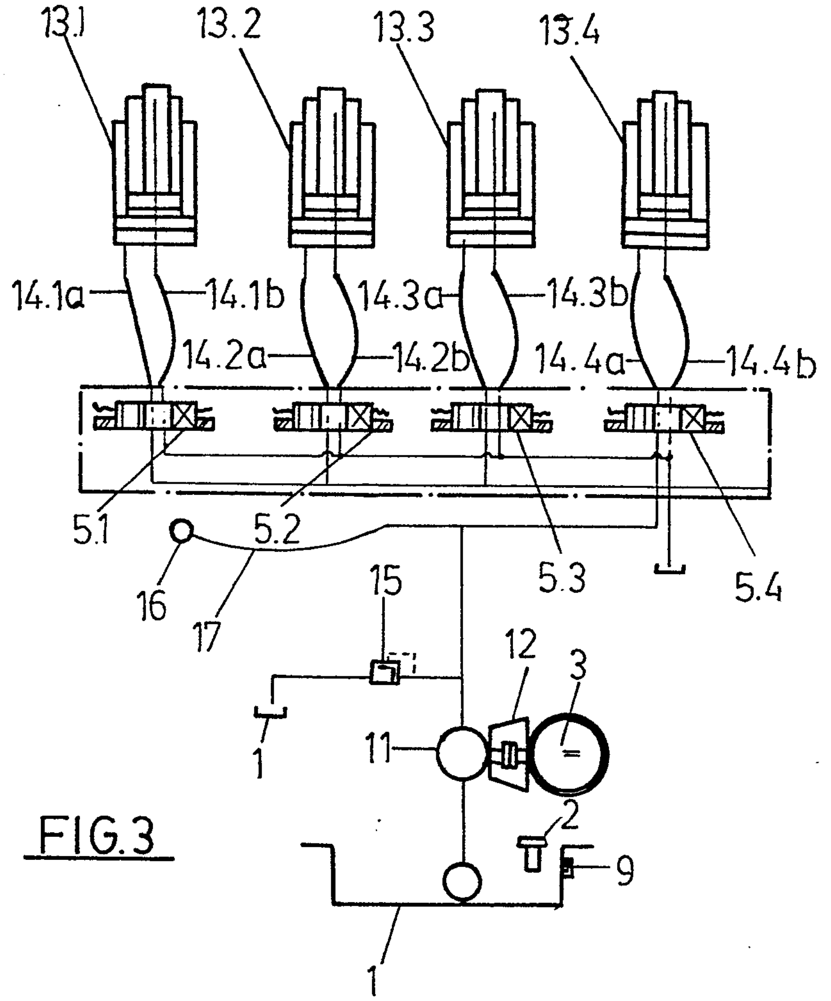
13.1
13.2
13.3
13.4
14.1a
14.1b
14.3a
14.3b
14.2a
14.2b
14.4a
14.4b
5.1
5.2
5.3
5.4
16
17
15
12
3
1
11
2
9
1

FIG.3

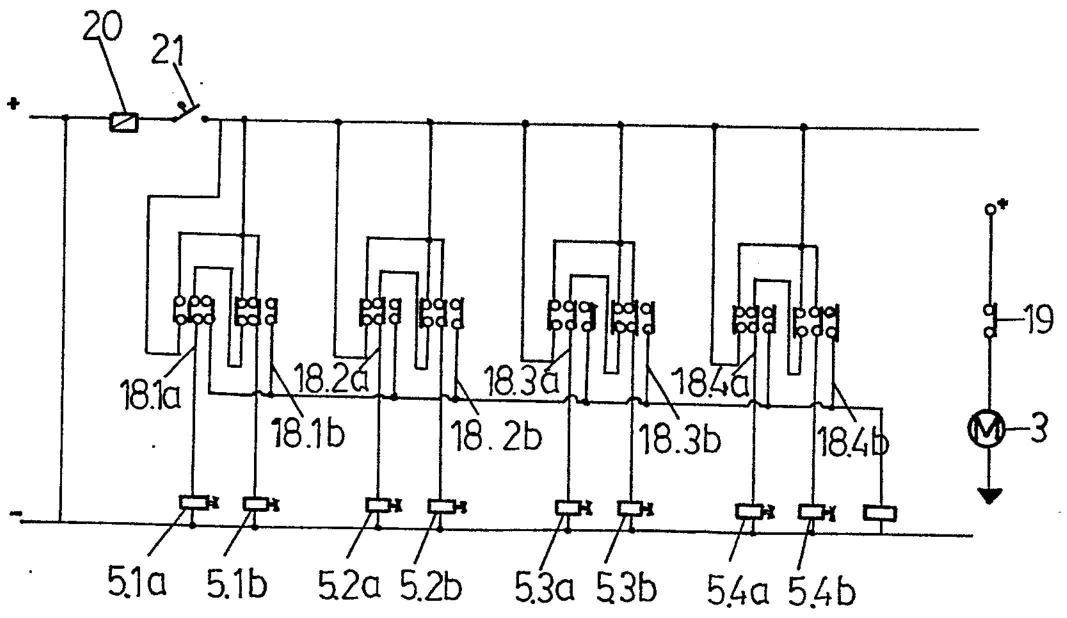
20
21
+
-
19
M
3
18.1a
18.1b
18.2a
18.2b
18.3a
18.3b
18.4a
18.4b
5.1a
5.1b
5.2a
5.2b
5.3a
5.3b
5.4a
5.4b

FIG.4

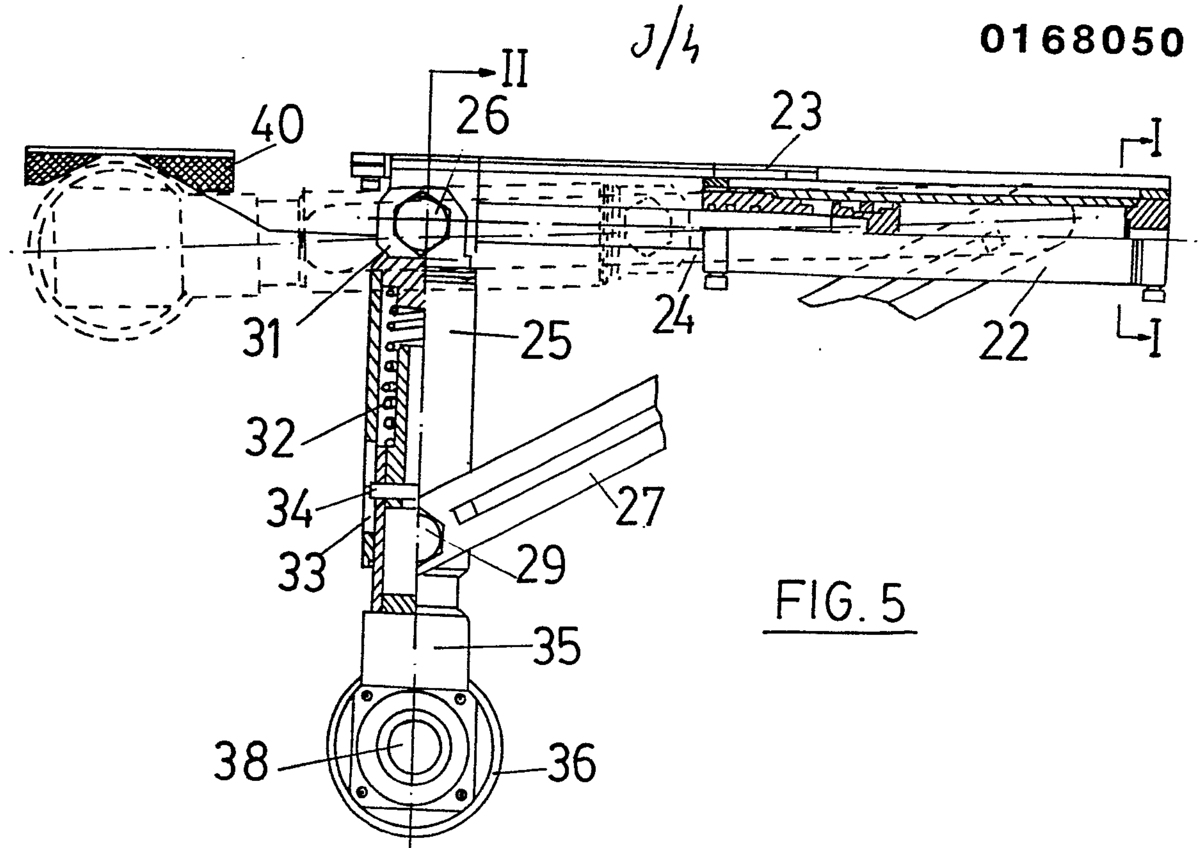


FIG. 5

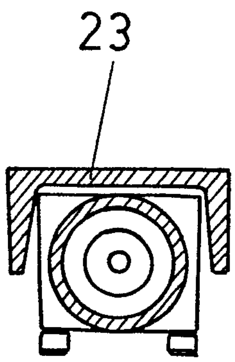


SECCION I-I

FIG. 6

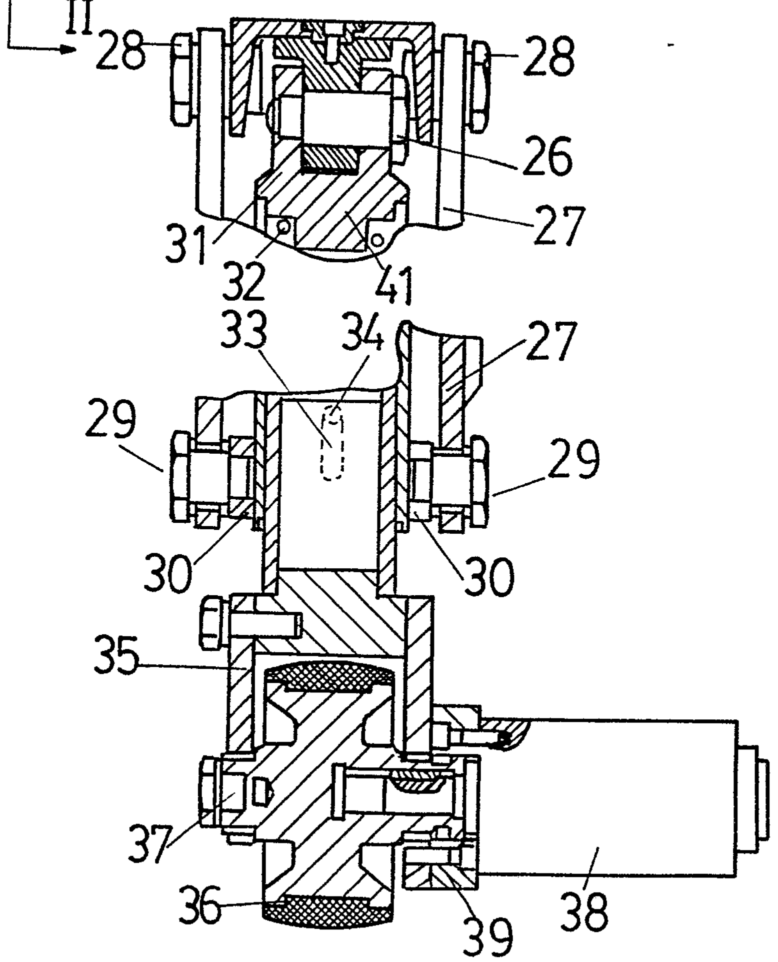


FIG.7

SECCION II-II

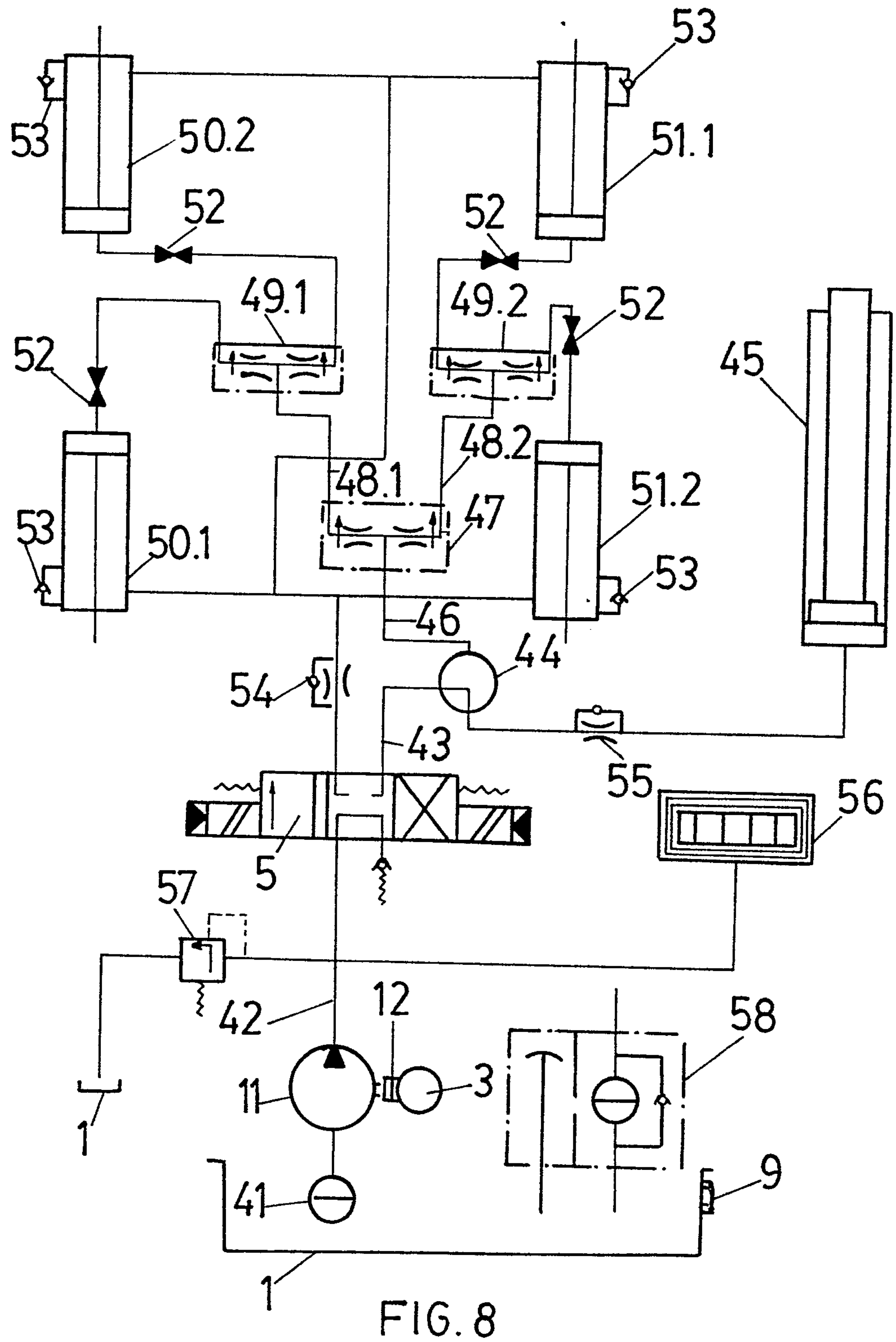
53
53
50.2
51.1
52
52
49.1
49.2
52
52
45
48.2
48.1
47
51.2
53
50.1
53
46
44
54
43
55
56
5
57
42
12
58
11
3
1
41
9
1

FIG. 8